# EUROPÄISCHE PATENTANMELDUNG

(11) **EP 3 789 945 A1**
(43) Veröffentlichungstag der Anmeldung: **10.03.2021**
(21) Anmeldenummer: 20193693.7
(22) Anmeldetag: 31.08.2020
(51) Int. Cl.: G06Q 10/08, G06Q 10/00

(54) **VERFAHREN UND SYSTEM ZUR STEUERUNG EINES MEHRWEGBEHÄLTERKREISLAUFS**

(30) Priorität: 03.09.2019 DE 102019123585
(71) Anmelder: Berger, Andreas, 51469 Bergisch Gladbach (DE)
(72) Erfinder: Berger, Andreas, 51469 Bergisch Gladbach (DE)
(74) Vertreter: Habermann Intellectual Property Partnerschaft von Patentanwälten mbB

(57) **Zusammenfassung**

Ein Verfahren und ein System zur Steuerung eines Mehrwegbehälterkreislaufs, in dem ein wiederverwendbarer Behälter (1) für Waren nach einem vorausgehenden Gebrauchszyklus ausgesondert oder einem nachfolgenden weiteren Gebrauchszyklus zugeführt wird, weisen einen Erfassungsschritt (3) auf, in welchem mit einer Kennzeichnungserfassungseinrichtung eine Behälterkennzeichnung des Behälters (1) eingelesen wird, wobei der Behälter (1) durch die Behälterkennzeichnung individualisiert und eindeutig gekennzeichnet ist. In einem anschließenden Identifikationsschritt (4) wird die erfasste Behälterkennzeichnung des Behälters (1) mit zu diesem Behälter (1) in einer Datenbank hinterlegten Behälterkenndaten zusammengeführt, wobei die Behälterkenndaten mindestens eine die mit diesem Behälter (1) bereits durchgeführten Gebrauchszyklen beschreibende Behälterumlaufzahl umfassen. In einem nachfolgenden Entscheidungsschritt (5) wird mit einer Mehrwegbehälterprüfeinrichtung anhand der Behälterumlaufzahl automatisiert entschieden wird, ob der Behälter (1) einem nachfolgenden Gebrauchszyklus zugeführt und bei den in der Datenbank hinterlegten Behälterkenndaten die Behälterumlaufzahl erhöht wird, oder aber der Behälter (1) ausgesondert wird, wenn die Behälterumlaufzahl eine Grenzbehälterumlaufzahl überschreitet.

## Beschreibung

Die Erfindung betrifft ein Verfahren zur Steuerung eines Mehrwegbehälterkreislaufs, in dem ein wiederverwendbarer Behälter nach einem vorausgehenden Gebrauchszyklus ausgesondert oder einem nachfolgenden weiteren Gebrauchszyklus zugeführt wird. Ferner betrifft die Erfindung ein System zur Durchführung eines Mehrwegbehälterkreislaufs zur Steuerung einer Anzahl von Mehrwegbehälterautomaten.

Beispielsweise in der Getränkeindustrie werden große Mengen an Getränken hergestellt und in Flaschen abgefüllt dem Verbraucher zum Kauf und zur Verwendung angeboten. Nach der Entnahme des Getränks aus der Flasche hat der Verbraucher oftmals keine weitere Verwendungsmöglichkeit für die geleerte Flasche. Auf Grund der Menge an verkauften Getränken und auch aus ökologischen Gesichtspunkten ist es sinnvoll, die Behälter zum Zwecke der Wiederverwertung an die Behälterhersteller oder an andere gesonderte Recyclingstellen zurückzuführen.

Im Falle von Behältern, die nur einmalig verwendet werden können, hat das Umweltbundesamt im Auftrag des Gesetzgebers mit einer Verpackungsverordnung reagiert. Die Verpackungsverordnung regelt die Verantwortung der Behälterhersteller für die Entsorgung der Behälter, wobei normalerweise das Material recycelt wird, aus welchem der Behälter hergestellt ist. Als Rückgabeanreiz für den Verbraucher wurde hierfür ein Einwegpfand eingeführt.

Trotz fehlender Gesetze hat sich in der Praxis für wiederverwendbare Behälter ebenfalls ein Mehrwegpfand etabliert. In der Praxis sind verschiedene Behälter für unterschiedliche Waren bekannt, die als Mehrwegbehälter nach einem ersten Gebrauchszyklus wiederverwendet und einem weiteren Gebrauchszyklus zugeführt werden. Neben den von der Getränkeindustrie verwendeten Getränkebehältern werden beispielsweise auch Gasflaschen oder Druckerkartuschen in einem Mehrwegbehälterkreislauf wiederverwendet. Die vorliegende Erfindung wird nachfolgend lediglich beispielhaft anhand von Getränkeflaschen und dem hierfür bekannten Mehrwegbehälterkreislauf beschrieben und verdeutlicht

So ist es beispielsweise bekannt, das für Getränkeflaschen ein Pfandsystem verwendet wird, um nach einem das Befüllen, den Verkauf und den anschließenden Gebrauch umfassenden Gebrauchszyklus die dann leeren Getränkeflaschen zurückzunehmen und nach einer Überprüfung und Reinigung erneut zu befüllen und dadurch einem weiteren Gebrauchszyklus zuzuführen. Mit den gängigen Pfandsystemen können Glasflaschen ebenso wie Kunststoffflaschen erfasst und gegebenenfalls wiederverwendet werden.

Im Gegensatz zu Einwegbehältern, deren Behältermaterial recycelt wird, kann ein Mehrwegbehälterkreislauf bei wiederverwendbaren Behältern die folgenden Verfahrensschritte umfassen:
1. Produktion des Behälters bei einem Behälterhersteller
2.Befüllen des Behälters mit einem Getränk bei einem Getränkehersteller
3.Angebot und Verkauf des Behälters bei einem Getränkehändler
4.Kauf des Behälters und Verbrauch des Getränks bei einem Verbraucher
5. Rückgabe des Behälters bei einer Behälterrückgabestelle
6. Überprüfung des Behälters und entweder Aussonderung eines nicht mehr weiterverwendbaren Behälters oder Reinigung des Behälters und Wiederbefüllung bei demselben oder bei einem anderen Getränkeabfüller,
wobei die Verfahrensschritte 2 bis 6 in Abhängigkeit von dem Ergebnis der jeweiligen Überprüfung des Behälters mehrfach durchgeführt werden und jeweils einen Gebrauchszyklus bilden.

Wiederverwendbare Behälter aus Polyethylenterephthalat (PET) überstehen in Abhängigkeit von dem jeweiligen Behälterinhalt normalerweise bis zu 15 Gebrauchszyklen und Behälter aus Glas über 50 Gebrauchszyklen. Besteht ein Behälter die Qualitätsprüfung im sechsten Schritt nicht, muss er ausgesondert und entweder entsorgt oder recycelt werden.

Wiederverwendbare Behälter werden oftmals als ökologisch vorteilhafter im Vergleich zu Einwegbehältern angesehen. Allerdings ist der für die Überprüfung der nach einem Gebrauchszyklus zurückgenommenen Behälter und deren anschließende Reinigung in Verbindung mit den jeweiligen Transportwegen anfallende Aufwand erheblich und stellt auch in ökologischer Hinsicht eine große Belastung für einen Mehrwegbehälterkreislauf dar.

Einerseits sind die Getränkehersteller bestrebt, sich durch individuelle Behälter im Marktumfeld voneinander abzusetzen und zu individualisieren, andererseits ergeben sich damit hohe Transportkosten bei überregionalen Verteilstrukturen. Ein Ansatz, die Transportkosten zu senken, besteht in der Verwendung von Einheitsflaschen, die von mehreren Getränkeherstellern gemeinsam verwendet werden können. Das ist zwar finanziell und ökologisch sinnvoll, steht aber im Gegensatz zum Bestreben der Getränkehersteller sich über die Behälter zu individualisieren.

Ein anderer Aspekt ist, dass die Behälterabfüller auf die Behälter angewiesen sind, auch um ihre Abfüllanlagen möglichst kontinuierlich auszulasten. Problematisch ist aber, dass die Behälterverteilung unter Umständen regional ungleichmäßig ist und es beispielsweise gerade in den Sommermonaten zu Engpässen kommen kann, weil die Behälter bei den Verbrauchern gebunden sind. Allein hierbei ergibt sich schon ein Eigeninteresse der Behälterabfüller an Optimierungsmöglichkeiten.

Ein weiteres Problem ist, dass die Behälterabfüller bei zurückgegebenen Behältern einen erheblichen Aufwand betreiben müssen, die Qualität eines jeden einzelnen Behälters zu überprüfen und abzuschätzen, ob der Behälter für die erneute Verwendung in einem weiteren Gebrauchszyklus geeignet ist. Meist wird dies bei Glasflaschen beispielsweise anhand der Größe der Oberflächenkratzer abgeschätzt.

Es wird als eine Aufgabe der Erfindung angesehen, den für die Durchführung eines Mehrwegbehälterkreislaufs anfallenden Aufwand zu reduzieren.

Die Aufgabe wird erfindungsgemäß dadurch gelöst, dass in einem Erfassungsschritt mit einer Kennzeichnungserfassungseinrichtung eine Behälterkennzeichnung des Behälters eingelesen wird, wobei das Behälter durch die Behälterkennzeichnung individualisiert und eindeutig gekennzeichnet ist, wobei in einem anschließenden Identifikationsschritt die erfasste Behälterkennzeichnung des Behälters mit zu diesem Behälter in einer Datenbank hinterlegten Behälterkenndaten zusammengeführt werden, wobei die Behälterkenndaten mindestens eine die mit diesem Behälter bereits durchgeführten Gebrauchszyklen beschreibende Behälterumlaufzahl umfassen, und dass anschließend in einem Entscheidungsschritt mit einer Mehrwegbehälterprüfeinrichtung anhand der Behälterumlaufzahl automatisiert entschieden wird, ob der Behälter einem nachfolgenden Gebrauchszyklus zugeführt und bei den in der Datenbank hinterlegten Behälterkenndaten die Behälterumlaufzahl erhöht wird, oder aber der Behälter ausgesondert wird, wenn die Behälterumlaufzahl eine Grenzbehälterumlaufzahl überschreitet, und dass der Erfassungsschritt mit der Kennzeichnungserfassungseinrichtung, der Identifikationsschritt mit der Datenbank und/oder der Entscheidungsschritt mit der Mehrwegbehälterprüfeinrichtung räumlich verteilt durchgeführt werden können, wobei die erfasste Behälterkennzeichnung und die Behälterkenndaten mit der Behälterumlaufzahl in mindestens einem Kommunikationsschritt zwischen der Kennzeichnungserfassungseinrichtung, der Datenbank und der Mehrwegbehälterprüfeinrichtung übermittelt werden.

Mit dem erfindungsgemäßen Verfahren wird die Entscheidung ganz wesentlich vereinfacht, ob ein Behälter erneut einem weiteren Gebrauchszyklus zugeführt wird oder aber aus dem Mehrwegbehälterkreislauf ausgesondert wird. Herkömmlicherweise muss mit aufwändigen und fehleranfälligen Prüfverfahren ein nach einem Gebrauchszyklus zurückgenommener Behälter daraufhin überprüft werden, ob die während der vorausgegangenen Benutzung in gegebenenfalls mehreren Gebrauchszyklen unvermeidbar erfolgende Abnutzung des Behälters unterhalb eines Schwellenwerts liegt, der für eine erneute gefahrlose Verwendung des Behälters vorgegeben wurde. Die aus der Praxis bekannten Prüfverfahren müssen beispielsweise von einem Getränkehersteller vor dem erneuten Verwenden und Befüllen eines Behälters mit Getränken durchgeführt werden, wobei dann auszusondernde Behälter unnötigerweise zu dem Getränkehersteller transportiert und anschließend ausgesondert werden müssen. Es ist ebenfalls aus der Praxis bekannt, dass die Überprüfung von Mehrwegbehälters in gesonderten Prüfeinrichtungen durchgeführt wird, wobei alle zurückgenommenen Behälter dann zunächst zu dieser Prüfeinrichtung transportiert werden müssen, um anschließend die wiederverwendbaren Behälter zu dem Getränkehersteller zu transportieren. Mit dem erfindungsgemäßen Verfahren wird eine aufwendige Überprüfung des zurückgenommenen Behälters mit einer Prüfeinrichtung überflüssig. Zudem können teilweise erhebliche Transportwege eingespart werden. Dadurch wird der Aufwand für einen Mehrwegbehälterkreislauf erheblich reduziert und die Durchführung eines Mehrwegbehälterkreislaufs sowohl in finanzieller Hinsicht als auch in ökologischer Hinsicht erheblich verbessert.

Bei einem erfindungsgemäßen Mehrwegbehälterkreislauf für Getränkebehälter bringt ein Verbraucher, der sein Getränk zunächst erworben und anschließend getrunken hat, den geleerten Behälter zu einem geeigneten Pfandautomaten, bzw. zu einer Behälterrückgabestelle, bei welcher der Behälter gegebenenfalls manuell entgegengenommen wird. Dort wird in dem Erfassungsschritt mit der Kennzeichnungserfassungseinrichtung die den Behälter eindeutig identifizierende und dadurch auch individualisierende Behälterkennzeichnung eingelesen. Für die Umrüstung bereits bekannter und verwendeter Pfandautomaten bzw. für deren Anpassung einer gegebenenfalls bereits vorhandenen Kennzeichnungserfassungseinrichtung bei einer Behälterrückgabestelle an den erfindungsgemäßen Erfassungsschritt ist oftmals lediglich ein geringer Aufwand erforderlich.

In dem Identifikationsschritt kann die Behälterkennzeichnung anschließend mit weiteren Informationen, wie beispielsweise einem Datum, einer Uhrzeit oder einer den Standort des Pfandautomaten bzw. der Behälterrückgabestelle individualisierenden Informationen zusammengefasst werden. Anhand der Behälterkennzeichnung können die erfassten Daten mit Behälterkenndaten zusammengeführt werden, die in einer Datenbank hinterlegt sind. Die Datenbank ist dabei in vorteilhafter Weise unabhängig von einer einzelnen Behälterrückgabestelle beispielsweise in einem zentralen Server gespeichert, der datenübertragend mit den Pfandautomaten bzw. mit den Kennzeichnungserfassungseinrichtungen verbunden ist oder zumindest bei Bedarf verbunden werden kann. Die Zusammenführung der Behälterkennzeichnung mit den Behälterkenndaten kann unmittelbar in der Behälterrückgabestelle beispielsweise in dem betreffenden Pfandautomaten erfolgen, indem die Behälterkenndaten von der Datenbank in dem Server zu dem Pfandautomaten übertragen werden. Möglich ist auch, dass die mit der Kennzeichnungserfassungseinrichtung erfasste Behälterkennzeichnung gegebenenfalls mit weiteren Daten zu einer zentralen Auswerteeinrichtung übermittelt wird, die entweder die Datenbank beinhaltet oder mit der Datenbank verbunden ist, bzw. werden kann.

Der anschließende Entscheidungsschritt kann je nach Ausgestaltung des Verfahrens bereits unmittelbar bei der Zurückgabe des Behälters in einer Behälterrückgabestelle oder in dem Pfandautomaten erfolgen. Die Kennzeichnungserfassungseinrichtung kann zu diesem Zweck mit einer Auswerteeinrichtung und gegebenenfalls auch mit einer Anzeigeeinrichtung kombiniert sein. Die Auswerteeinrichtung überprüft, ob die für diesen Behälter in den Behälterkenndaten enthaltene Behälterumlaufzahl eine für diesen Behälter vorgegebene Grenzbehälterumlaufzahl übersteigt. In diesem Fall wird der Behälter ausgesondert und keinem weiteren Gebrauchszyklus mehr zugeführt. Falls die Behälterumlaufzahl niedriger als die Grenzbehälterumlaufzahl ist kann der Behälter weiterverwendet und einem weiteren Gebrauchszyklus zugeführt werden. Insbesondere bei einer manuellen Entgegennahme des Behälters an einer Behälterrückgabestelle kann mit der Anzeigeeinrichtung angezeigt werden, ob der Behälter weiterverwendet werden kann oder ausgesondert werden muss.

Es ist ebenfalls möglich, an Stelle von Getränkeflaschen andere mehrfach verwendbare Behälter wie Gasflaschen oder Tonerkartuschen, aber auch beispielsweise Gemüsekisten oder Getränkekisten mit einer individuellen Behälterkennzeichnung zu versehen und das erfindungsgemäße Verfahren für die Steuerung des Mehrwegbehälterkreislaufs der entsprechenden Behälter anzuwenden. So können beispielsweise auch standardisierte Transportpaletten oder Transportbehälter als Mehrwegbehälter in einem erfindungsgemäß ausgestalteten Mehrwegbehälterkreislauf verwendet werden.

Es ist ebenfalls möglich, eine unternehmensinterne Wiederverwendung von Behältern mit dem erfindungsgemäßen Verfahren zu steuern. So können beispielsweise Trinkgefäße oder Geschirr, die von einem Catering-Unternehmen oder in einem Gastronomiebetrieb mehrfach verwendet werden, ebenfalls mit einer individuellen Behälterkennzeichnung versehen sein. Ein Gebrauchszyklus umfasst dabei die Reinigung des Trinkgefäßes oder Geschirrteils, dessen anschließende Befüllung und Nutzung während der Verpflegung von Gästen, sowie das wieder Einsammeln der benutzten Trinkgefäße oder Geschirrteile. Erfahrungsgemäß können beispielsweise Tassen mehr als 500 Reinigungs- und Nutzungszyklen ohne erhebliche Beschädigungen überstehen, bevor das Risiko eines unerwünschten Zerbrechens des Trinkgefäßes oder des Geschirrteils während dessen bestimmungsgemäßer Nutzung merklich ansteigt und das betreffende Trinkgefäß oder das Geschirrteil aussortiert und nicht weiter verwendet werden sollte. Mit dem erfindungsgemäßen Verfahren kann die Anzahl der Gebrauchszyklen erfasst und ohne aufwendige Überprüfungen festgestellt werden, ob die tatsächliche Anzahl der bereits erfolgten Gebrauchszyklen eine für das betreffende Trinkgefäß oder Geschirrteil vorgegebene Grenzbehälterumlaufzahl übersteigt und das Trinkgefäß aussortiert werden sollte, oder ob die Anzahl der bereits erfolgten Gebrauchszyklen noch unterhalb der Grenzbehälterumlaufzahl liegt und das Trinkgefäß weiter genutzt und einem erneuten Gebrauchszyklus zugeführt werden kann.

Auf Grund der eindeutigen und individualisierenden Behälterkennzeichnung können auch zunächst lediglich unternehmensintern verwendete Behälter, beispielsweise Trinkbecher in einem Cafe, absichtlich oder unabsichtlich einem unternehmensübergreifenden Mehrwegbehälterkreislauf zugeführt und von anderen Unternehmen oder Nutzern innerhalb des Mehrwegbehälterkreislaufs weiter verwendet werden, ohne dass dadurch die automatisierte Erfassung und Anpassung der dem betreffenden Behälter zugeordneten Behälterumlaufzahl beeinträchtigt oder unmöglich wird.

Die Behälterumlaufzahl kann vorzugsweise ein Skalenwert von null bis Grenzbehälterumlaufzahl sein, wobei jeweils um eins erhöht wird, sobald das Behälter einem nachfolgenden weiteren Gebrauchszyklus zugeführt wird. In diesem Fall kann die Behälterumlaufzahl bereits während der Entgegennahme des Behälters an der Behälterrückgabestelle erhöht werden. Denkbar ist aber auch, dass die Behälterumlaufzahl anhand einer komplexeren Funktion, wie beispielsweise einer Exponentialfunktion, mit den Gebrauchszyklen und anderen Lebensdauerkennwerten als Parameter, bestimmt wird, sodass sich bessere und zuverlässigere Lebensdauerabschätzungen bezüglich des Behälters in den jeweiligen Gebrauchszyklen treffen lassen. Es ist ebenfalls denkbar, dass die Behälterumlaufzahl erst bei einem erneuten Befüllen des Behälters und dann beispielsweise in Abhängigkeit von der in den Behälter eingefüllten Ware erhöht wird. So kann beispielsweise bei dem Befüllen des Behälters mit einer den Behälter beanspruchenden Ware die Behälterumlaufzahl stärker erhöht werden als bei dem Befüllen des Behälters mit einer den Behälter weniger beanspruchenden Ware. Es ist ebenfalls denkbar, dass anhand von Abschätzungen über übliche Gebrauchszyklendauern, die für unterschiedliche Waren unterschiedlich lang sein können, die Behälterumlaufzahl unterschiedlich stark erhöht wird.

Erfindungsgemäß können die einzelnen Verfahrensschritte an verschiedenen Orten ablaufen, sodass sich eine räumlich verteilte Struktur ergibt. Optional können beispielsweise die Erfassungsschritte in den jeweiligen Pfandautomaten oder an den Behälterrückgabestellen implementiert werden, während die Zusammenführung der dort erfassten Behälterkennzeichnung und der Behälterkenndaten aus einer Datenbank zentral und beispielsweise in einer zentralen Auswerteeinrichtung erfolgen kann. Die jeweiligen Entscheidungsschritte können beispielsweise bei den verschiedenen Behälterbefülleinrichtungen durchgeführt werden. Ebenfalls denkbar ist, dass der Identifikationsschritt und der Entscheidungsschritt gemeinsam und zentral verarbeitet werden, und dass die Ergebnisse in Form von Behälterumlaufzahlen und anderen Kenndaten zu den einzelnen Behältern nur noch an die Behälterabfüller oder an zentrale Behälterprüfeinrichtungen kommuniziert werden, damit dort die jeweiligen Behälter entweder ausgesondert oder wiederverwendet werden können.

Die gekapselte Struktur des erfindungsgemäßen Verfahrens bietet die Möglichkeit, im Zusammenhang mit den herkömmlichen Mehrwegbehälterkreisläufen verschiedenste Dienstleistungen zu entwickeln und zu vermarkten.

In einer vorteilhaften Ausgestaltung der Erfindung ist vorgesehen, dass die Erfassung der Behälterkennzeichnung im Erfassungsschritt mit der Kennzeichnungserfassungseinrichtung berührungslos durchgeführt wird. Die eindeutige Kennzeichnung jedes einzelnen Behälters zusammen mit der berührungslosen Erfassung der Behälterkennzeichnung des Behälters bietet die Möglichkeit, modernste Technologien wie beispielsweise RFID nutzen zu können. Auch können so die Behälter besser vor Verschleiß geschützt werden, wobei die Umlaufzahlen erhöht und weitere Ressourcen eingespart werden können.

Für eine bessere Rückverfolgbarkeit der Behälter ist in einer optionalen Ausgestaltung der Erfindung vorgesehen, dass den Behälterkenndaten im Identifikationsschritt zusätzlich zu der Behälterumlaufzahl eine Standortangabe, ein Datum und/oder eine Uhrzeit einer Behälterrückgabe hinzugefügt werden, sodass in den Behälterkenndaten für eine Behälterrückgabe räumliche und zeitliche Informationen enthalten sind. Informationen darüber, wann und wo ein Behälter jeweils einem Pfandautomaten oder einer Behälterrückgabestelle zugeführt wurde, liefern zuverlässige Möglichkeiten zur Rückverfolgbarkeit (Traceability) der Behälter. Optional können auf Basis der Behälterkenndaten Abrechnungsmodalitäten der Geschäftspartner individuell bestimmt werden. Es ist ebenfalls denkbar, dass die Behälterabfüller aufbauend auf den gesammelten Informationen ihre Anlagenauslastung zuverlässiger planen können, wobei auch Versorgungsengpässe schneller erkennbar sind. Ein weiterer Vorteil ist eine bessere Planbarkeit der Logistik zur Behälterverteilung oder einzelner Transportschritte. Spediteure, die in der Nähe einer Behälteransammlung sind, können kurzfristig und gezielt beauftragt werden, sodass Transportkosten weiter reduziert werden können.

So kann beispielsweise mit einer geeigneten Erfassung des jeweiligen Standorts der Behälter in jedem Behälterlager, in welchem eine Anzahl von Behältern gelagert sind, eine automatisierte Lagerbestandserfassung durchgeführt werden. So kann automatisiert festgestellt werden, in welchen Behälterlagern für den jeweiligen Zweck zu viele oder aber zu wenig Behälter gelagert sind, um kurzfristig eine entsprechende Anpassung des jeweiligen Lagerbestands vornehmen zu können. Zudem kann mit dem erfindungsgemäßen Verfahren ein Inventursystem eingerichtet werden, sodass jeder einzelne Behälter nachverfolgt und lokalisiert werden kann, sobald er mit einer Kennzeichnungserfassungseinrichtung erfasst wird. Auf diese Weise kann verhindert werden, dass eine übermäßig große Anzahl von Behältern dem Mehrwegbehälterkreislauf entzogen werden, ohne dass hierfür eine Notwendigkeit besteht.

In einer besonders vorteilhaften Ausgestaltung der Erfindung ist vorgesehen, dass die Behälterumlaufzahl zusätzlich an oder in dem Behälter in einem persistenten Speichermedium abgespeichert wird. Ein Vorteil dieser Ausgestaltung ist die Einbeziehung der Behälter in die Rückverfolgung, wenn in jedem Behälter auch die ihm zugeordnete Behälterumlaufzahl abspeichert wird. Herrenlose oder Regionen überschreitende Behälter könnten in verschiedene parallel existierende Mehrwegbehälterkreisläufe integriert werden, wenn beispielsweise die lokale zentrale Recheneinheit, in der die Identifikationsschritte durchgeführt werden und die fremden Behälterkenndaten des Behälters noch bekannt sind, den Behälter nicht identifizieren kann. Optional können auf diese Art mehrere lokal angesiedelte, zentrale Auswerteeinrichtungen mit jeweiligen Datenbanken aufgebaut werden, die ebenfalls untereinander in Kommunikation stehen, wobei die jeweils erfassten Behälter beispielsweise regionale Grenzen zwischen einzelnen mit den lokalen Auswerteeinrichtungen abgedeckten Regionen überschreiten .

Als eine weitere Aufgabe der Erfindung wird angesehen, ein System zur Durchführung eines Verfahrens zur Steuerung eines Mehrwegbehälterkreislaufs mit einer Anzahl von Behälterrückgabeeinrichtungen so auszugestalten, dass der für die Durchführung des Mehrwegbehälterkreislaufs erforderliche Aufwand reduziert wird.

Die Aufgabe wird erfindungsgemäß dadurch gelöst, dass die Behälterrückgabeeinrichtungen jeweils eine Kennzeichnungserfassungseinrichtung aufweisen, mit der eine Behälterkennzeichnung erfasst werden kann, und mit einer zentralen Datenspeichereinrichtung, wobei die zentrale Datenspeichereinrichtung und die Behälterrückgabeeinrichtungen miteinander über einen Kommunikationskanal datenübertragend verbindbar sind, und wobei in der zentralen Datenspeichereinrichtung eine Datenbank derart eingerichtet ist, dass für jeden Behälter dessen Behälterkenndaten in der Datenbank in der zentralen Datenspeichereinrichtung abgespeichert sind. Erfindungsgemäß sind jeder zentralen Datenspeichereinrichtung mehrere Behälterrückgabeeinrichtungen zugeordnet. Die Behälterrückgabeeinrichtungen, beispielsweise geeignet angepasste Pfandautomaten, nehmen jeweils die Behälter von den Verbrauchern entgegen und führen den erfindungsgemäßen Erfassungsschritt durch. Anschließend wird ein Kommunikationskanal zu der zugeordneten zentralen Datenspeichereinrichtung aufgebaut und die Behälterkennzeichnung wird mit optionalen weiteren Kenndaten, wie beispielsweise einer Pfandautomatenkennzeichnung, übertragen. Die Datenspeichereinrichtung kann auch mit einer Auswerteeinrichtung kombiniert oder datenübertragend verbindbar sein, wobei mit der Auswerteeinrichtung die Identifikationsschritte und die Entscheidungsschritte des erfindungsgemäßen Verfahrens durchgeführt werden können. Mit der Datenspeichereinrichtung können die Behälterkenndaten gespeichert und nach Bedarf verteilt werden. Optional kann ausgewählten Teilnehmern (Behälterhersteller, Behälterrückgabestellen, Behälterabfüller, etc.) ein direkter Zugriff auf die Datenspeichereinrichtung gewährt werden, wobei die jeweiligen Teilnehmer die Behälterkenndaten abrufen und gegebenenfalls verändern können, oder zur Bewertung einzelner Behälter heranziehen können.

Auf Grund der erfindungsgemäßen modularen Struktur des Systems können optional mehrere lokale Datenspeichereinrichtung und eine übergeordnete Auswerteeinrichtung mit einer Vielzahl damit verbindbarer Behälterrückgabeeinrichtungen kombiniert werden, sodass sich das erfindungsgemäße System regionalen Gegebenheiten anpassen kann. Es ist ebenfalls denkbar, dass einzelne Behälterrückgabeeinrichtungen mit verschiedenen Datenspeichereinrichtungen verbindbar sind, sodass die betreffenden Behälterrückgabeeinrichtungen für die gleichzeitige Verwendung in verschiedenen Mehrwegbehälterkreisläufen oder beispielsweise für verschiedene Pfandsysteme geeignet sind. In ländlichen Regionen kann eine Datenspeichereinrichtung mit einer Anzahl an Behälterrückgabeeinrichtungen ein großes Gebiet abdecken, wohingegen städtische Gebiete eine große Pfandautomatendichte auf kleiner Fläche mit mehreren Datenspeichereinrichtungen beherbergen können. Optional können auch hierarchische Strukturen mit den Behälterrückgabeeinrichtungen, den Datenspeichereinrichtungen und den dazugehörigen Auswerteeinrichtungen aufgebaut werden.

In einer vorteilhaften Ausgestaltung der Erfindung ist vorgesehen, dass der Behälterabfüller und die zentrale Datenspeichereinrichtung miteinander über einen Kommunikationskanal verbunden sind, sodass der Behälterabfüller die Behälter anhand der Behälterkenndaten in der zentralen Datenspeichereinrichtung nach dem Entscheidungsschritt erkennen und aussondern kann, wenn deren Behälterumlaufzahl größer als die dazugehörige Grenzbehälterumlaufzahl ist.

Es kann viele Behälterabfüller auf dem Markt geben, die alle individuell agieren möchten. Es ist zweckmäßig, wenn den Behälterabfüllern ein Zugriff auf die Datenspeichereinrichtungen gewährt werden kann, sodass sie individuell nach Bedarf ihre Behälter verfolgen können. Die Behälterabfüller könnten ihre Behälterverteilung beobachten, die Abfüllanlagen danach planen und bei Bedarf oder Engpass gewisse Pfandautomaten gezielt anfahren (lassen), wenn sich dort eine gewisse Anzahl ihrer Behälter befindet. Weiter können die Behälterabfüller die Behälterumlaufzahl beobachten und Behälter bei den Herstellern nach Bedarf nachbestellen.

In einer weiteren vorteilhaften Ausgestaltung der Erfindung ist vorgesehen, dass eine Behälterabfülleinrichtung und die zentrale Datenspeichereinrichtung miteinander über einen Kommunikationskanal datenübertragend verbindbar sind, sodass die Behälterabfülleinrichtung einen Behälter anhand der Behälterkenndaten in der zentralen Datenspeichereinrichtung nach dem Entscheidungsschritt erkennen und aussondern kann, wenn dessen Behälterumlaufzahl größer als die für diesen Behälter vorgegebene Grenzbehälterumlaufzahl ist.

Eine Auswerteeinrichtung, mit welcher der Entscheidungsschritt durchgeführt werden kann, kann auch bei einem Behälterlieferanten angeordnet und von diesem verwendet werden, wenn der Behälterlieferant auch bereits benutzte Behälter zurücknimmt und nach deren Reinigung und gegebenenfalls Aufarbeitung wieder an einen Behälterabfüller ausliefert.

Wenige Behälterlieferanten könnten mehrere Regionen und viele Behälterabfüller mit ihren Behältern bedienen. Das erhöht die wirtschaftliche Planbarkeit und die Umschlagszahlen in der Logistik, wobei auch Transportkosten eingespart werden können. Weiter können die Behälterlieferanten auch gezielt auszusondernde Behälter lokalisieren und ohne Umwege über die Behälterabfüller direkt abholen, was ebenfalls Transportkosten einsparen kann. Ein weiterer Vorteil ist die Möglichkeit für die Behälterlieferanten und insbesondere für Behälterhersteller, auf Grundlage der gesammelten Behälterkenndaten bessere und robustere Behälter oder zuverlässigere Lebensdauermodelle für die einzelnen Behältertypen zu entwickeln.

Optional ist vorgesehen, dass die Behälterrückgabeeinrichtung eine Kontrolleinrichtung aufweist, mit welcher die Rücknahme eines Behälters verweigert werden kann, wenn der Behälter nach dem Entscheidungsschritt auszusondern wäre. Der Behälter kann dann unmittelbar beispielsweise einer Recyclinganlage zugeführt werden. Die Kontrolleinrichtung kann gegebenenfalls mit der Datenspeichereinrichtung oder mit einer Auswerteeinrichtung verbindbar sein, sodass die Rückgabe des Behälters nach einem Datenabgleich mit der Datenspeichereinrichtung oder durch eine Auswerteeinrichtung verweigert werden kann, wenn der Behälter anhand der Behälterkenndaten nach dem Entscheidungsschritt auszusondern wäre.

In dieser Ausgestaltung können zahlreiche Transportwege und entsprechende Transportkosten insbesondere für die auszusondernden Behälter eingespart werden. Dadurch lässt sich auch die ökologische Bilanz eines erfindungsgemäßen Mehrwegbehälterkreislaufs zusätzlich verbessern.

Nachfolgendend werden beispielhafte Ausgestaltungen der Erfindung gezeigt. Es zeigt:
Figur 1 eine schematische Darstellung des erfindungsgemäßen Verfahrens zur Steuerung eines Mehrwegbehälterkreislaufs als schematischer Ablaufplan,
Figur 2 eine schematisch vereinfachte Darstellung eines erfindungsgemäßen Systems zur Steuerung eines Mehrwegbehälterkreislaufs, und
Figur 3 eine schematische Darstellung eines exemplarischen Mehrwegbehälterkreislaufs in einem Gastronomiebetrieb.

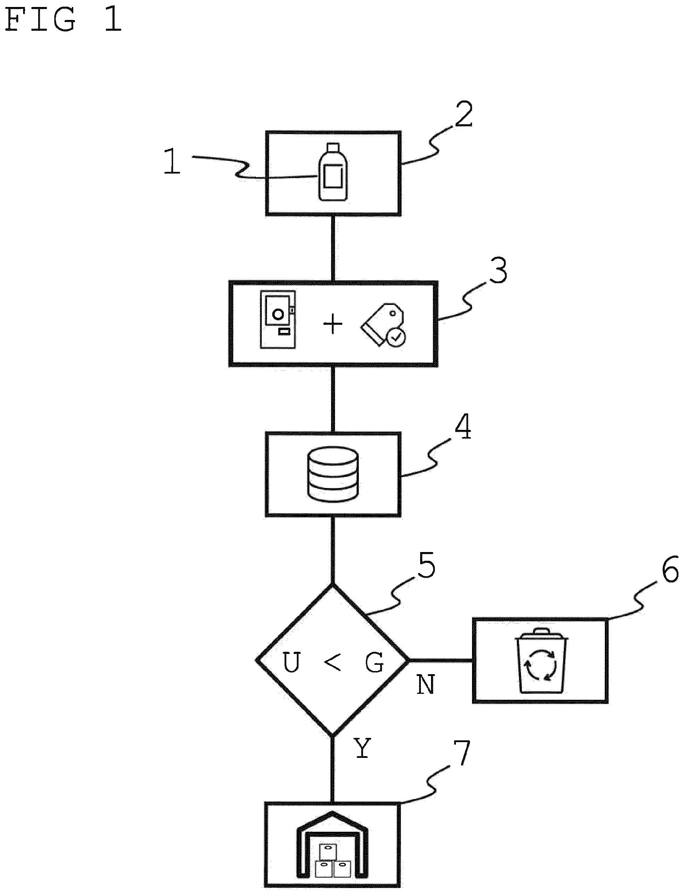

Figur 1 zeigt eine schematische Darstellung eines erfindungsgemäßen Verfahrensablaufs als Ablaufplan für ein beispielhaftes Szenario, wobei das Szenario die Herstellung und mehrfache Verwendung einer Getränkeflasche als mehrfach verwendbarer Behälter 1 darstellt. Für den Behälter 1 wurde nach dessen Herstellung ein Eintrag mit Behälterkenndaten in einer Datenbank erzeugt. Der Behälter 1 kann entweder neu sein oder bereits mehrere Gebrauchszyklen in einem Mehrwegbehälterkreislauf durchlaufen haben und jeweils befüllt, verkauft, entleert und zurückgegeben worden sein.

In einem Rückgabeschritt 2 bringt ein Verbraucher den von ihm nicht mehr benötigten Behälter 1 zu einer Behälterrückgabestelle, in welcher der Behälter 1 entweder automatisiert beispielsweise mit einem geeignet ausgestalteten Pfandautomaten oder manuell zurückgenommen wird. In einem Erfassungsschritt 3 wird an der Behälterrückgabestelle mit einer Kennzeichnungserfassungseinrichtung eine Behälterkennzeichnung des Behälters 1 beispielsweise mittels RFID-Technologie berührungslos eingelesen, wobei der Behälter 1 durch die Behälterkennzeichnung eindeutig gekennzeichnet und dadurch individualisiert ist. Die Behälterkennzeichnung kann auch jedes andere maschinenlesbare Format aufweisen. Der Erfassungsschritt 3 kann vorteilhafterweise automatisiert mit einer Behälterrückgabeeinrichtung durchgeführt werden. Die Behälterrückgabeeinrichtung kann ein mit einer Kennzeichnungserfassungseinrichtung ausgestatteter und entsprechend angepasster herkömmlicher Pfandautomat sein. Es ist ebenfalls möglich, in dem Erfassungsschritt mit einer manuell bedienbaren Kennzeichnungserfassungseinrichtung die Behälterkennzeichnung manuell zu erfassen.

Die in dem Erfassungsschritt 3 mit der Kennzeichnungserfassungseinrichtung erfasste Behälterkennzeichnung wird vorzugsweise verschlüsselt an eine zentrale Datenspeichereinrichtung mit der damit verbundenen Datenbank übermittelt. Dabei können zusätzlich zu der Behälterkennzeichnung noch weitere Informationen wie beispielsweise Datums- und Ortsinformationen der Behälterrückgabestelle zum Zeitpunkt der Behälterrückgabe erfasst und ebenfalls an die Datenspeichereinrichtung übermittelt werden.

In der zentralen Datenspeichereinrichtung werden die in dem Erfassungsschritt 3 erfassten und an die Datenspeichereinrichtung übermittelten Informationen zu dem Behälter 1 und der Behälterrückgabe in einem Identifikationsschritt 4 verarbeitet. Dafür werden die übermittelten Informationen mit den in der Datenbank gespeicherten und anhand der übermittelten Behälterkennzeichnung identifizierbaren Behälterkenndaten verknüpft. Diese Verknüpfung kann entweder in der Datenspeichereinrichtung erfolgen, was insbesondere bei einer manuellen Behälterrückgabe vorteilhaft ist, oder die in der Datenbank der Datenspeichereinrichtung zu einem zurückgegebenen Behälter 1 gespeicherten Behälterkenndaten können an die automatisierte Behälterrückgabeeinrichtung zurückübermittelt werden, um dort weiterverarbeitet werden zu können.

In einem nachfolgenden Entscheidungsschritt 5, der entweder in der Datenspeichereinrichtung bzw. in einer damit verbundenen zentralen Auswerteeinrichtung oder aber in einer automatisierten Behälterrückgabeeinrichtung durchgeführt werden kann, wird die dem Behälter 1 zugeordnete Behälterumlaufzahl mit der Grenzbehälterumlaufzahl des betreffenden Behälters 1 verglichen. Ist die Behälterumlaufzahl größer als die Grenzbehälterumlaufzahl, wird eine zusätzliche Eintragung, eine Aussonderungseintragung den Behälterkenndaten in der Datenspeichereinrichtung hinzugefügt, die den Behälter als zum Aussondern markiert. Der Behälter 1 kann dann entweder sofort beispielsweise in der Behälterrückgabeeinrichtung ausgesondert und einer Recyclingeinrichtung zugeführt werden, oder nach einem anschließenden Transport zu einem Behälterlieferanten oder Behälterabfüller vor einer erneuten Aufarbeitung und Rückführung in den Mehrwegbehälterkreislauf ausgesondert werden.

Wird in dem Entscheidungsschritt 5 bei einem Vergleich der Behälterumlaufzahl mit der Grenzbehälterumlaufzahl festgestellt, dass die Behälterumlaufzahl kleiner als die Grenzbehälterumlaufzahl ist, bzw. dass die Aussonderungseintragung nicht gesetzt ist, wird der Behälter 1 erneut dem Mehrwegbehälterkreislauf und einem erneuten Gebrauchszyklus zugeführt. Der Behälter 1 wird entweder von einem Behälterlieferanten oder von einem Behälterabfüller gereinigt, anschließend von einem Behälterabfüller wiederbefüllt und in einem Verteilungsschritt 7 über einen Groß- oder Einzelhändler wieder einem Verbraucher angeboten.

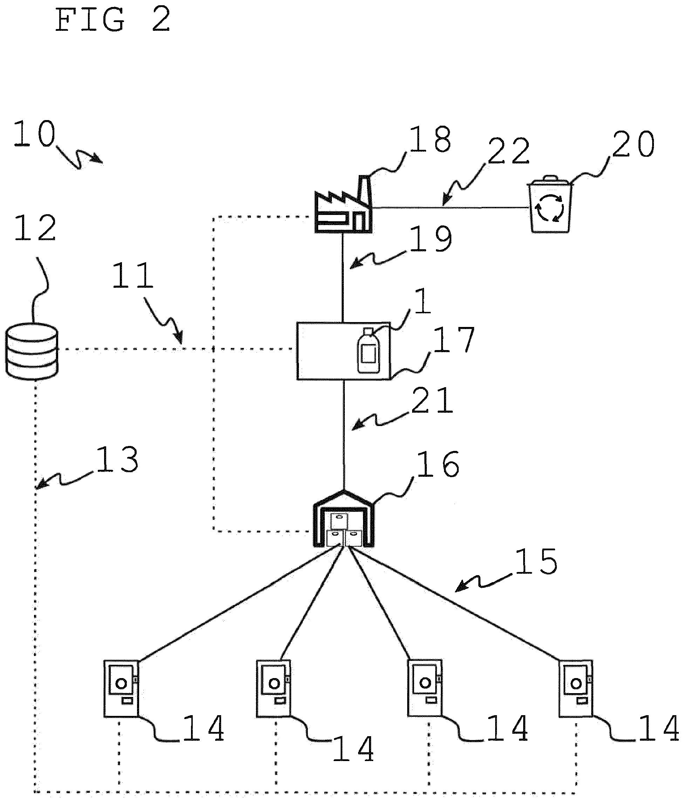

Figur 2 zeigt eine beispielhafte Darstellung eines erfindungsgemäßen Systems 10, mit welchem das erfindungsgemäße Verfahren zur Steuerung eines Mehrwegbehälterkreislaufs durchgeführt werden kann. Lediglich beispielhaft sind vier Behälterrückgabeeinrichtungen 14 dargestellt, die räumlich verteilt angeordnet sind. Vorteilhafterweise sind die Behälterrückgabeeinrichtungen 14 jeweils in einer Verkaufsstätte für befüllte Behälter 1, beispielsweise Getränkeflaschen, platziert. Von den einzelnen Behälterrückgabeeinrichtungen 14 werden zurückgenommene und nicht aussortierte Behälter 1 über einen Rücktransportweg 15 zu einem Behälterlieferanten 16 transportiert.

Für eine erstmalige oder erneute Befüllung vorgesehene Behälter 1 werden von einer Behälterabfülleinrichtung 17 befüllt und in den Handel gebracht. Die Behälterabfülleinrichtung 17 und der Behälterlieferant 16 sind über einen Behälterfluss 21 verbunden. Über diesen Behälterfluss 21 werden große Mengen an von den Behälterrückgabeeinrichtungen zurückgenommenen und für ein erneutes Wiederbefüllen vorgesehene Behälter 1 von dem Behälterlieferanten 16 der Behälterabfülleinrichtung 17 zugeführt.

Die automatisierten Behälterrückgabeeinrichtungen 14 sind jeweils mit einer zentralen Datenspeichereinrichtung 12 über einen Kommunikationskanal 13, beispielsweise über das Internet verbunden. Auch der Behälterlieferant 16, die Behälterabfülleinrichtung 17 und eine Behälterherstelleinrichtung 18 sind mit der Datenspeichereinrichtung 12 über einen geeigneten Kommunikationskanal 11 beispielsweise über das Internet verbunden.

Ein Verbraucher kann seinen entleerten und nicht mehr benötigten Behälter 1 bei einer beliebigen Behälterrückgabeeinrichtung 14 zurückgeben. Die Behälterrückgabeeinrichtung 14 erfasst mit einer Kennzeichnungserfassungseinrichtung die Behälterkennzeichnung des Behälters 1. Anschließend wird der Kommunikationskanal 13 zu der zentralen Datenspeichereinrichtung 12 aufbaut, wobei die Behälterkennzeichnung und gegebenenfalls alle weiteren mit der Kennzeichnungserfassungseinrichtung erfassten relevanten Behälterinformationen an die zentrale Datenspeichereinrichtung 12 übermittelt werden. Die in der Datenspeichereinrichtung 12 gespeicherten Behälterkenndaten werden dann bei Bedarf angepasst. In den Behälterkenndaten, die in der Datenspeichereinrichtung 12 gespeichert sind, wird auch die Aussonderungseintragung gespeichert, falls der betreffende Behälter 1 ausgesondert und nicht mehr erneut dem Mehrwegbehälterkreislauf zugeführt werden soll.

Der Behälterlieferant 16 kann ebenfalls eine Kommunikationsverbindung 11 zu der zentralen Datenspeichereinrichtung 12 aufbauen und analysieren, welche Behälterrückgabeeinrichtungen 14 wie viele zurückgenommene und für eine weitere Verwendung geeignete Behälter gelagert haben, um auf diese Weise seine Fahrten zur Abholung der Behälter 1 sinnvoll zu planen und zu koordinieren. Dadurch lassen sich Transportkosten sparen und die Logistik optimieren.

Nach dem Erfassen bzw. Einsammeln der Behälter durch den Behälterlieferant 16 können die für eine erneute Verwendung vorgesehenen Behälter der Behälterabfülleinrichtung 17 und der Behälterherstelleinrichtung 18 mitgeteilt werden, wobei beide über eine gemeinsame Kommunikationsverbindung 11 darüber informiert sind, wie viele Behälter 1 zum erneuten Befüllen zur Verfügung stehen, bzw. wie viele Behälter 1 aus dem Mehrwegbehälterkreislauf ausgesondert werden müssen und deshalb durch neu hergestellte Behälter ersetzt werden müssen. So lassen sich die Anlagenauslastungen des Behälterherstellers 18 und auch des Behälterlieferanten 16 zuverlässig im Voraus planen und einteilen.

Einzelne Behälterströme, bzw. entsprechende Transporte 15, 21, 22, 19 von neuen Behältern 1, von wiederverwendbaren Behältern 1 und von auszusondernden und zu recycelnden Behältern 1 lassen sich effizient über die Kommunikationskanäle 13, 11 koordinieren und steuern, sodass Ressourcen und die Umwelt geschont werden.

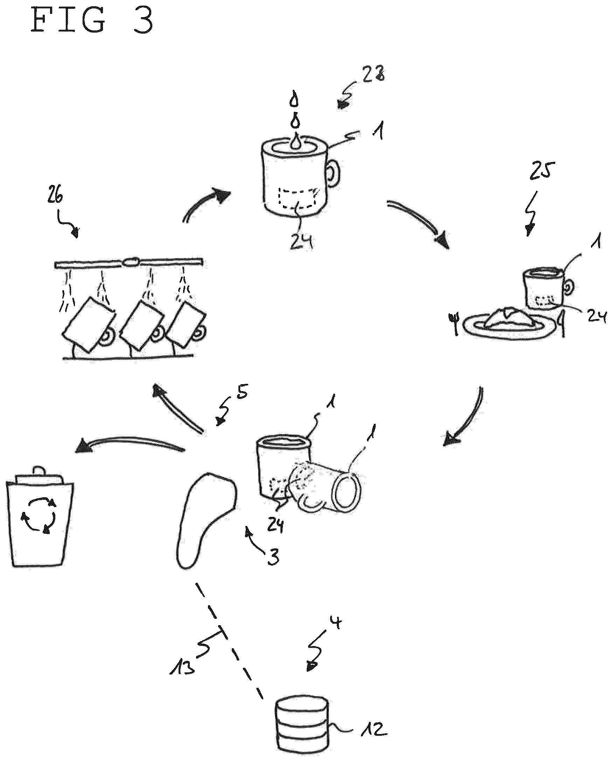

In Figur 3 ist beispielhaft die Verwendung des erfindungsgemäßen Verfahrens für die Steuerung eines Mehrwegbehälterkreislaufs innerhalb eines Gastronomiebetriebs dargestellt. Heiße oder kalte Getränke werden in einem Befüllungsschritt 23 in tassenförmige Behälter 1 gefüllt und den Kunden angeboten. Jeder Behälter 1 weist einen RFID-Chip 24 mit einer individuellen Behälterkennzeichnung auf, wobei der RFID-Chip 24 gegebenenfalls von außen unsichtbar in den tassenförmigen Behälter 1 eingebettet ist. Nachdem der Kunde in einem Verbrauchsschritt 25 das ihm angebotene Getränk konsumiert und den Behälter 1 geleert hat, wird der leere Behälter 1 in eine Küche des Gastronomiebetriebs zurückgebracht. Dort wird in dem Erfassungsschritt 3 mit der Kennzeichnungserfassungseinrichtung die Behälterkennzeichnung aus dem RFID-Chip 24 ausgelesen und in dem Identifikationsschritt 4 über den Kommunikationskanal 13 an die zentrale Datenspeichereinrichtung 12 übermittelt. Dort wird anhand der in dem Erfassungsschritt 3 erfassten Behälterkennzeichnung die in der Datenspeichereinrichtung 12 zu diesem Behälter 1 gespeicherte Behälterumlaufzahl abgerufen und in dem Entscheidungsschritt 5 durch einen Vergleich mit der für diesen Behälter 1 vorgegebenen Grenzbehälterumlaufzahl überprüft, ob der Behälter 1 aussortiert und dem Recycling zugeführt werden soll, oder ob der Behälter 1 erneut verwendet werden kann. In diesem Fall wird die in der Datenspeichereinrichtung 12 gespeicherte Behälterumlaufzahl für diesen Behälter 1 erhöht und der Behälter 1 in der Küche zunächst in einem Reinigungsschritt 26 gereinigt und anschließend erneut in einem weiteren Befüllungsschritt 23 befüllt und verwendet. Für unterschiedliche Behälter 1, beispielsweise für Tassen oder Krüge sowie für Gläser oder auch Teller können in Abhängigkeit von der jeweils erwarteten Nutzungsdauer jeweils unterschiedliche Grenzbehälterumlaufzahlen vorgegeben werden.

Ein derart ausgestaltetes erfindungsgemäßes Verfahren kann in vorteilhafter Weise auch bei einem Catering-Betrieb eingesetzt werden, wobei der Befüllungsschritt 23 und der Verbrauchsschritt 25 während einer Veranstaltung vor Ort durchgeführt werden, während der nachfolgende Erfassungsschritt 3, der Identifikationsschritt 4 und Entscheidungsschritt 5 in den Räumen des Catering-Unternehmens durchgeführt werden.

## Patentansprüche

1. Verfahren zur Steuerung eines Mehrwegbehälterkreislaufs, in dem ein wiederverwendbarer Behälter (1) für Waren nach einem vorausgehenden Gebrauchszyklus ausgesondert oder einem nachfolgenden weiteren Gebrauchszyklus zugeführt wird, **dadurch gekennzeichnet, dass** in einem Erfassungsschritt (3) mit einer Kennzeichnungserfassungseinrichtung eine Behälterkennzeichnung des Behälters (1) eingelesen wird, wobei der Behälter (1) durch die Behälterkennzeichnung individualisiert und eindeutig gekennzeichnet ist, wobei in einem anschließenden Identifikationsschritt (4) die erfasste Behälterkennzeichnung des Behälters (1) mit zu diesem Behälter (1) in einer Datenbank hinterlegten Behälterkenndaten zusammengeführt werden, wobei die Behälterkenndaten mindestens eine die mit diesem Behälter (1) bereits durchgeführten Gebrauchszyklen beschreibende Behälterumlaufzahl umfassen, und dass anschließend in einem Entscheidungsschritt (5) mit einer Mehrwegbehälterprüfeinrichtung anhand der Behälterumlaufzahl automatisiert entschieden wird, ob der Behälter (1) einem nachfolgenden Gebrauchszyklus zugeführt und bei den in der Datenbank hinterlegten Behälterkenndaten die Behälterumlaufzahl erhöht wird, oder aber der Behälter (1) ausgesondert wird, wenn die Behälterumlaufzahl eine Grenzbehälterumlaufzahl überschreitet, und dass der Erfassungsschritt (3) mit der Kennzeichnungserfassungseinrichtung, der Identifikationsschritt (4) mit der Datenbank und/oder der Entscheidungsschritt (5) mit der Mehrwegbehälterprüfeinrichtung räumlich verteilt durchgeführt werden können, wobei die erfasste Behälterkennzeichnung und die Behälterkenndaten mit der Behälterumlaufzahl in mindestens einem Kommunikationsschritt zwischen der Kennzeichnungserfassungseinrichtung, der Datenbank und der Mehrwegbehälterprüfeinrichtung übermittelt werden.

2. Verfahren nach Anspruch 1, **dadurch gekennzeichnet, dass** die Erfassung der Behälterkennzeichnung im Erfassungsschritt (3) mit der Kennzeichnungserfassungseinrichtung berührungslos durchgeführt wird.

3. Verfahren nach Anspruch 1 oder 2, **dadurch gekennzeichnet, dass** den Behälterkenndaten im Identifikationsschritt (4) zusätzlich zu der Behälterumlaufzahl eine Standortangabe und/oder ein Datum und/oder eine Uhrzeit einer Behälterrückgabe hinzugefügt werden, sodass in den Behälterkenndaten für eine Behälterrückgabe räumliche und zeitliche Informationen enthalten sind.

4. Verfahren nach einem der voranstehenden Ansprüche, **dadurch gekennzeichnet, dass** die Behälterumlaufzahl zusätzlich an oder in dem Behälter (1) in einem persistenten Speichermedium abgespeichert wird.

5. System (10) zur Durchführung eines Verfahrens gemäß den Ansprüchen 1 bis 4 zur Steuerung eines Mehrwegbehälterkreislaufs mit einer Anzahl von Behälterrückgabeeinrichtungen (14), **dadurch gekennzeichnet, dass** die Behälterrückgabeeinrichtungen (14) jeweils eine Kennzeichnungserfassungseinrichtung aufweisen, mit der eine Behälterkennzeichnung erfasst werden kann, und mit einer zentralen Datenspeichereinrichtung (12), wobei die zentrale Datenspeichereinrichtung (12) und die Behälterrückgabeeinrichtungen (14) miteinander über einen Kommunikationskanal (13) datenübertragend verbindbar sind, und wobei in der zentralen Datenspeichereinrichtung (12) eine Datenbank derart eingerichtet ist, dass für jeden Behälter (1) dessen Behälterkenndaten in der Datenbank in der zentralen Datenspeichereinrichtung (12) gespeichert sind.

6. System (10) nach Anspruch 5 mit einer Behälterabfülleinrichtung (17), **dadurch gekennzeichnet, dass** die Behälterabfülleinrichtung (17) und die zentrale Datenspeichereinrichtung (12) miteinander über einen Kommunikationskanal (11) datenübertragend verbindbar sind, sodass die Behälterabfülleinrichtung (17) einen Behälter (1) anhand der Behälterkenndaten in der zentralen Datenspeichereinrichtung (12) nach dem Entscheidungsschritt (5) erkennen und aussondern kann, wenn dessen Behälterumlaufzahl größer als die für diesen Behälter (1) vorgegebene Grenzbehälterumlaufzahl ist.

7. System (10) nach Anspruch 5 mit einer Behälterherstelleinrichtung (18), mit welcher ein Behälter (1) hergestellt werden kann, **dadurch gekennzeichnet, dass** die Behälterherstelleinrichtung (18) und die zentrale Datenspeichereinrichtung (12) miteinander über einen Kommunikationskanal (11) datenübertragend verbindbar sind, sodass mit der Behälterherstelleinrichtung (18) für einen neu hergestellten Behälter (1) zugeordnete Behälterkenndaten in der zentralen Datenspeichereinrichtung (12) erzeugt und in der Datenbank abgespeichert werden können.

8. System (10) nach Anspruch 5, **dadurch gekennzeichnet, dass** die Behälterrückgabeeinrichtung (14) eine Kontrolleinrichtung aufweist, mit welcher die Rücknahme eines Behälters (1) verweigert werden kann, wenn der Behälter (1) nach dem Entscheidungsschritt (5) auszusondern wäre.
